# EUROPÄISCHE PATENTSCHRIFT

(11) **EP 0 648 144 B1**
(45) Veröffentlichungstag und Bekanntmachung des Hinweises auf die Patenterteilung: **10.09.1997**
(21) Anmeldenummer: 94911045.6
(22) Anmeldetag: 12.04.1994
(51) Int. Cl.: B01D 29/15, B01D 29/52, B01D 29/96

(54) **FILTER ZUR STERILFILTRATION VON SUSPENSIONEN**
STERILE-FILTRATION FILTER FOR SUSPENSIONS
FILTRE POUR FILTRATION STERILE DE SUSPENSIONS

(30) Priorität: 19.04.1993 CH 1187/93
(43) Veröffentlichungstag der Anmeldung: 19.04.1995
(73) Patentinhaber: DRM, DR. MÜLLER AG, CH-8708 Männedorf ZH (CH)
(72) Erfinder: HÖHLE, Glenn, CH-8707 Uetikon a.S. (CH)
(86) Internationale Anmeldenummer: CH9400073
(87) Internationale Veröffentlichungsnummer: WO9423819

(56) Entgegenhaltungen:
- EP-A- 0 070 589
- EP-A- 0 155 336
- DE-U- 8 714 943

## Beschreibung

Bei der Filtration von sterilen Suspensionen im Pharmabereich ist es unumgänglich alle Teile einer Filtrationseinrichtung vor der eigentlichen Sterilisation, beispielsweise mit überhitztem Wasserdampf, vorab mechanisch gründlich von allen anhaftenden Feststoffen gründlich zu reinigen. Dies ist in der Regel nur möglich, wenn eine Apparatur in alle ihre Einzelteile zerlegt wird. Die Zerlegung einer Filtereinheit in ihre Teile ist in vielen Fällen, wenn überhaupt, nur unter grossem Aufwand möglich.

Eine Filtervorrichtung mit mehreren Filterkerzen, die in einem Druckbehälter hängend angeordnet sind ist bekannt. Die zweiteiligen Filterkerzen bestehen in ihrem filtratseitigen Befestigungsteil im wesentlichen aus einem Rohr, welches seinerseits das eigentliche Filtermittel in Form eines Gewebeschlauches trägt. in der bekannten Vorrichtung sind die Filterelemente hintereinander hängend an heraussnehmbaren Sammelrohren, durch welche das Klarfiltrat abgeführt wird angeordnet (EP-A-0 070 589). Eine solche Filtervorrichtung ist im chemischen Grossbetrieb zum Auswaschen von Filterkuchen bzw. Suspensionen gut geeignet, ist jedoch für eine Sterilfiltration im Bereich der Pharmaanwendung ungeeignet.

Aus der EP-A-0 066 921 ist auch ein Filterelement bekannt, welches aus einem geschlossenen Zentralrohr als Stützkörper und zur Abfuhr eines Filtrats dient, um welches Filtermittel angeordnet sind, bekannt. Danach können neben Kuststoffrohren auch Metallrohre verwendet werden.

Aufgabe der Erfindung ist es, ein Filter zur Sterilfiltration zu schaffen, das eine einfache Inspektion und Reinigung aller Teile, insbesondere der Filterelemente erlaubt.

Die Aufgabe wird erfindungsgemäss dadurch gelöst, dass der Hohlkörper in seinem unteren Teil als Filtermittel und in seinem oberen Teil als geschlossenes Rohr ausgebildet ist, wobei das sich über die Länge des Hohlkörpers erstreckende Zentralrohr aus dem Hohlkörper herausnehmbar angeordnet ist, ohne dass der Druckbehälter geöffnet werden muß.

Das hat den Vorteil, dass das Zentralrohr einer Inspektion und mechanischen Reinigung zugänglich ist und auch die Filterkerze ohne Entnahme auf einfache Weise von aussen sichtbar und zugänglich gereinigt werden kann.

Es ist zweckmässig, einen Flansch im oberen Drittel des Hohlkörpers, bzw. des Zentralrohr vorzusehen. Das hat den Vorteil, dass möglichst viel der Fläche des Filterelements als aktive Filterfläche genutzt werden kann.

Der stirnseitige Flansch dient zur Befestigung des Hohlkörpers am horizontal verlaufenden Abflussrohr an welchem mehrere Filterelemente angeordnet sein können.

Es ist zweckmässig, wenn der Hohlkörper an seiner freien Stirnseite eine Verschlusskappe trägt, welche konstruktiv verschiedenartig ausgebildet sein kann.

Es ist vorteilhaft, die Verschlusskappe mit einer einfachen oder doppelten Ausdrehung zu versehen, wodurch das Rückblasen oder Rückspülen sowie die Reinigung und Sterilisierung des Filterelements erleichtert wird.

In einer Variante ist die Verschlusskappe mit einer Bohrung versehen, die als Kondensat ablauf vorgesehen ist, welcher in Form eines Sintermetalls oder einem anderen porösen Mittel bestehen kann.

Die Erfindung soll anhand einer Zeichnung ausführlich beschrieben werden. Es zeigen:
- Fig. 1: einen Schnitt durch das erfindungsgemässe Sterilfilter
- Fig. 2: ein erfindungsgemässes Filterelement im der Aufsicht
- Fig. 3: das Filterelement nach Fig. 2 im Längsschnitt
- Fig. 4: eine Variante des erfindungsgemässen Filterelements im Längsschnitt

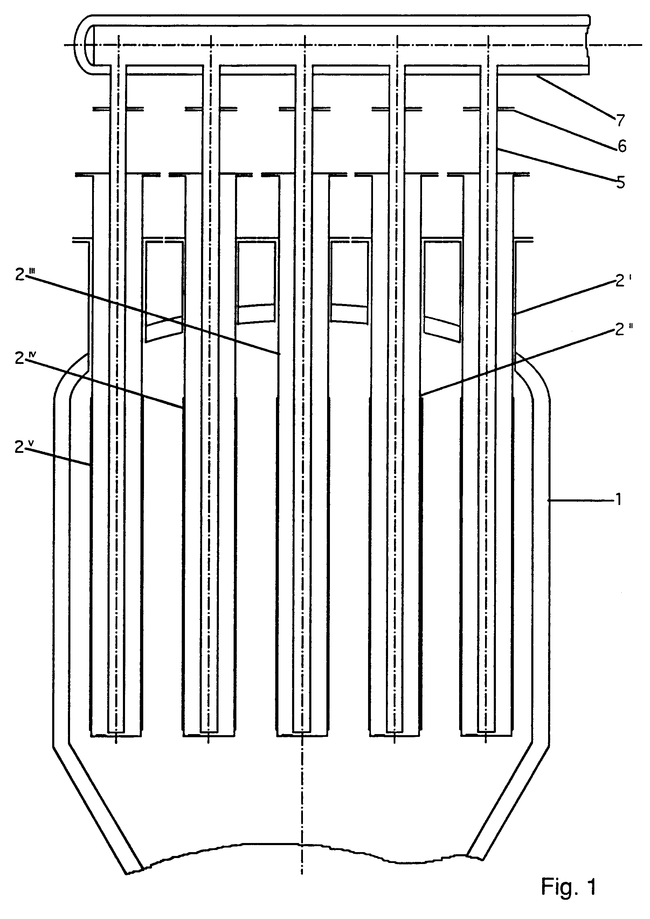

In Fig. 1 ist mit dem Bezugszeichen 1 die Wand eines Druckbehälters bezeichnet. Im Druckbehälter 1 sind Filterelemente 2', 2'', 2''', 2^{iv} und 2^{v} so angeordnet dass sie fluiddicht durch den oberen Teil des Druckbehälters führen. Im Inneren der Filterelemente 2 sind Zentralrohre 5 angeordnet, welche über einen Flansch 6 mit einem Sammelrohr 7 verbunden sind, welches zur Filtratabfuhr dient.

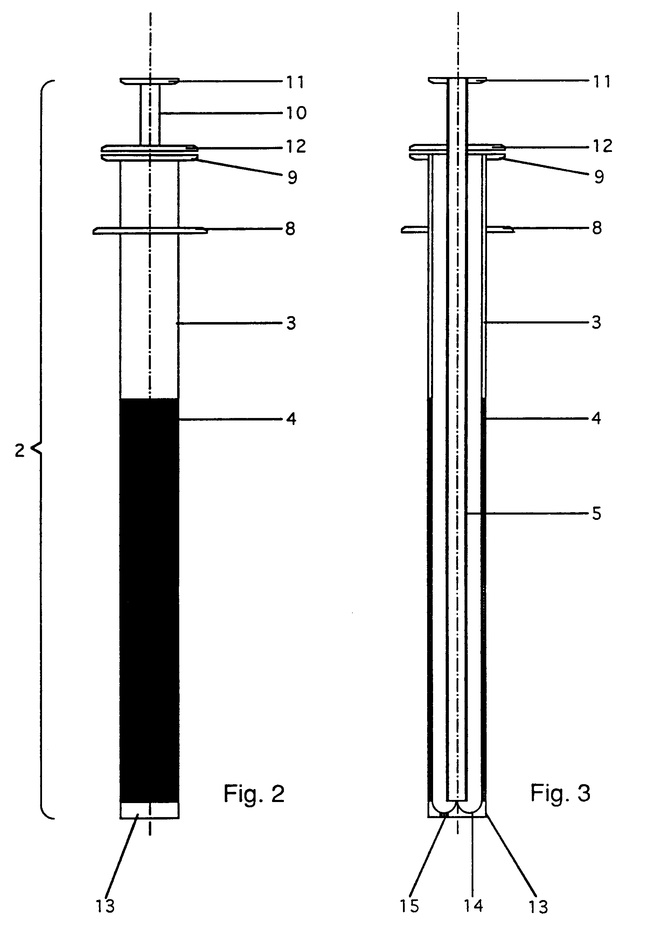

In Fig. 2 ist ein einzelnes Filterelement 2 gezeigt, welches in seinem oberen Teil aus einem Hohlkörper 3 und in seinem unteren Teil aus einem selbsttragenden Filtermittel 4 besteht. Das Filtermittel 4 selbst kann aus einer Sintermetallkerze oder einem anderen porösem Körper bestehen, welches durch Dampf sterilisierbar ist. Anstelle von Filterkerzen können auch mit semipermeablen Membranen versehene perforierte Stützkörper zum Einsatz kommen. Im Hohlkörper 3 ist ein Flansch 8 und ein Flansch 9 vorgesehen. Im Filtermittel 2 ist der obere Teil eines Zentralrohrs 10 mit einem Stirnflansch 11 und einem im oberen Drittel des Zentralrohrs vorgesehenen weiteren Flansch 12 ausgestattet. Der Hohlkörper 3 wird in seinem unteren Teil durch eine Verschlusskappe 13 abgeschlossen.

In Fig. 3 erstreckt sich das Zentralrohr 5 über die ganze Länge des Hohlkörpers 3 und das Filtermittel 4. Fig 3 unterscheidet sich im wesentlichen von Fig. 2 in ihrem unteren Teil. Die Verschlusskappe 13 ist mit einer halbkreisförmigen Ausdrehung 14 versehen. Die Ausdrehung 14 dient zum Umlenken der Flüssigkeit und erleichtert das Rückblasen oder Rückspülen sowie die Reinigung und Sterilisierung des Filterelements 2 durch Verhindern von toten Ecken. In der Verschlusskappe 13 ist ein Kondensatablauf 15, welcher in Form eines Sintermetalls oder einem anderen porösen Medium ausgebildet ist, zur vollständigen Entleerung von Restflüssigkeit aus dem Filterelements 2.

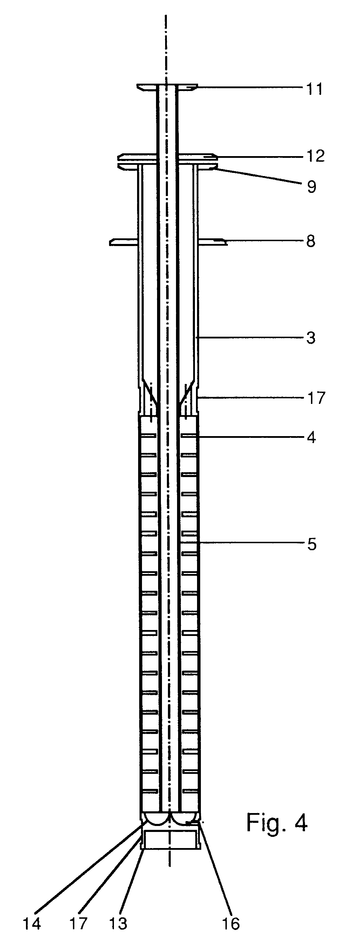

In Fig 4 besteht das Filtermittel 2 aus dem Hohlkörper 3 und in seinem unteren Teil aus einem selbsttragenden Filtermittel 4'. Das Filtermittel 4' selbst besteht aus einem Rohrbündel, welches in Form von sechs Rohren um das Zentralrohr 5 ausgebildet ist. Die Verschlusskappe 13 unterscheidet sich von derjenigen der Fig 3 darin, dass die Restflüssigkeit über eine Bohrung 16 ablaufen kann. Die Verschlusskappe 13 unterscheidet sich von derjenigen der Fig. 3 durch ihre grössere Länge und ist mit einer Nut 17 zur Aufnahme und Befestigung eines Filtermittels vorgesehen.

Im Betrieb während eines Filtrationszyklus wird eine zu filtrierende Suspension mittels einer nicht gezeigten Pumpe in den Druckbehälter 1 gepumpt. Die entstehenden Feststoffe lagern sich auf dem Filtermittel 4 ab, während ein Filtrat über die Verschlusskappe 13 und die Öffnung des Zentralrohrs 5 dieses durchströmt und über das Sammelrohr 7 den Druckbehälter 1 verlässt. Nach beendeter Filtration kann das Zentralrohr 5 durch Lösen der Verschraubung am Flansch 11 vom Sammelrohr 7 getrennt werden. Nach dem Trennen der beiden Flansche 12 und 9 kann das Zentralrohr 5 aus dem Hohlkörper 3 herausgezogen und gereinigt werden, während die Reinigung der Innenseite der Hohlkörpers getrennt vorgenommen werden kann. Die Montage des gereinigten Zentralrohrs 5 in den Hohlkörper 3 erfolgt durch einfaches Einstecken. Anstelle der Flansche können auch bekannte Schnellverschlüsse verwendet werden.

Ein besonderer Vorteil des erfindungsgemässen Filters ist darin zu sehen, dass das Filterelement 2 ausbaubar ist, ohne dass der Druckbehälter 1 geöffnet werden muss. Das Filterelement ist so zerlegbar, so dass das Zentralrohr und die eigentlichen Filtermittel getrennt voneinander gereinigt werden können.

## Patentansprüche

1. Filter zur Sterilfiltration von Suspensionen, bestehend aus einem Druckbehälter (1) mit einem oder mehreren kerzenförmigen Filterelementen (2), die aus einem Hohlkörper (3) mit einem selbsttragenden Filtermittel (4) und einem Zentralrohr (5) gebildet sind, dadurch gekennzeichnet, dass der Hohlkörper (3) in seinem unteren Teil als Filtermittel (4) und in seinem oberen Teil als geschlossenes Rohr ausgebildet ist, wobei das sich über die Länge des Hohlkörpers (3) erstreckende Zentralrohr (5) aus dem Hohlkörper (3) herausnehmbar ist, ohne dass der Druckbehälter geöffnet werden muß.

2. Filter nach Anspruch 1, dadurch gekennzeichnet, dass im oberen Drittel des Hohlkörpers (3) ein Flansch (8) vorgesehen ist.

3. Filter den Ansprüchen 1 und 2, dadurch gekennzeichnet, dass der Hohlkörper (3) an seiner Stirnseite einen Flansch (11) in einem Abstand vom Flansch (12) trägt.

4. Filter nach Anspruch 1, dadurch gekennzeichnet, dass der Hohlkörper (3) an seiner freien Stirnseite eine Verschlusskappe (13) trägt.

5. Filter nach Anspruch 4, dadurch gekennzeichnet, dass die Verschlusskappe (13) mit einer halbkreisförmigen Ausdrehung (14) versehen ist.

6. Filter nach Anspruch 4, dadurch gekennzeichnet, dass die Verschlusskappe (13) mit einem Kondensatablauf versehen ist.

7. Filter nach Anspruch 4, dadurch gekennzeichnet, dass die Verschlusskappe (13) eine Nut (17) aufweist.

8. Filter nach Anspruch 4, dadurch gekennzeichnet, dass die Verschlusskappe (13) eine Bohrung (16) aufweist.

## Claims

1. A filter for the sterile filtration of suspensions, consisting Of a pressure vessel (1) with one or more candle-shaped filter members (2), which are formed from a hollow body (3) with a self-supporting filter means (4) and a central tube (5), characterised in that the hollow body (3) is constructed in its lower part as filter means (4) and in its upper part as a closed tube, in which the central tube (5) extending over the length of the hollow body (3) is removable from the hollow body (3) without the pressure vessel having to be opened.

2. A filter according to Claim 1, characterised in that in the upper third of the hollow body (3) a flange (8) is provided.

3. A filter according to Claims 1 and 2, characterised in that the hollow body (3) carries on its end face a flange (11) at a distance from the flange (12).

4. A filter according to Claim 1, characterised in that the hollow body (3) carries on its free end face a closure cap (13).

5. A filter according to Claim 4, characterised in that the closure cap (13) is provided with a semicircular recess (14).

6. A filter according to Claim 4, characterised in that the closure cap (13) is provided with a condensate outlet.

7. A filter according to Claim 4, characterised in that the closure cap (13) has a groove (17).

8. A filter according to Claim 4, characterised in that the closure cap (13) has a bore (16).

## Revendications

1. Filtre pour la filtration stérile de suspensions, formé d'un récipient sous pression (1) contenant un ou plusieurs éléments filtrants en forme de bougies (2) qui se composent d'un corps creux (3) comportant un élément filtrant autoporteur (4), et d'un tube central (5), caractérisé en ce que le corps creux (3) est conçu dans sa partie inférieure comme un élément filtrant (4) et dans sa partie supérieure comme un tube fermé, étant précisé que le tube central (5) qui s'étend sur la longueur du corps creux (3) est apte à être enlevé de celui-ci sans qu'il faille ouvrir le récipient sous pression.

2. Filtre selon la revendication 1, caractérisé en ce qu'une bride (8) est prévue dans le tiers supérieur du corps creux (3).

3. Filtre selon les revendications 1 et 2, caractérisé en ce que le corps creux (3) porte sur son côté frontal une bride (11) espacée de la bride (12).

4. Filtre selon la revendication 1, caractérisé en ce que le corps creux (3) porte un couvercle (13) sur son côté frontal libre.

5. Filtre selon la revendication 4, caractérisé en ce que le couvercle (13) est pourvu d'un creux semicirculaire (14).

6. Filtre selon la revendication 4, caractérisé en ce que le couvercle (13) est pourvu d'un orifice de sortie de condensat.

7. Filtre selon la revendication 4, caractérisé en ce que le couvercle (13) présente une rainure (17).

8. Filtre selon la revendication 4, caractérisé en ce que le couvercle (13) présente un perçage.
